# EUROPÄISCHE PATENTSCHRIFT

(11) **EP 0 294 317 B1**
(45) Veröffentlichungstag und Bekanntmachung des Hinweises auf die Patenterteilung: **03.11.1993**
(21) Anmeldenummer: 88730126.5
(22) Anmeldetag: 27.05.1988
(51) Int. Cl.: G06F 13/16, G06F 15/16, H04Q 11/04, H04Q 3/545

(54) **Gemeinsamer Zugriff eines zentralen Datenprozessors und eines dezentralen Ein-Ausgabenprozessors auf einen gemeinsamen Speicher**
Shared access to a common memory by a central data processor and a decentralized input/output processor
Accès partagé à une mémoire commune par un processeur de données centrales et un processeur entrée/sortie décentralisé

(30) Priorität: 04.06.1987 DE 3718987
(43) Veröffentlichungstag der Anmeldung: 07.12.1988
(73) Patentinhaber: SIEMENS AKTIENGESELLSCHAFT, 80333 München (DE)
(72) Erfinder: Schröter, Otto, D-4300 Essen 13 (DE); Veith, Hans-Werner, D-4630 Bochum 7 (DE)

(56) Entgegenhaltungen:
- EP-A- 0 021 254
- TELCOM REPORT (SIEMENS), Band 9, Heft 4, Juli/August 1986, Seiten 257-263; H. FELLINGER et al.: "Höhere Steuerleistung im EWSD durch den Koordinationsprozessor CP 113"
- ISS'84, Florence, IT, Band 1, 7.-11. Mai 1984, Seiten 23A.5.1-23A.5.5; K.E. HUHN et al.: "System Architecture of a Future Oriented Complete Digital PABX Family"

## Beschreibung

Die Erfindung betrifft ein Verfahren zur Steuerung eines digitalen Kommunikationssystems mit einem zentralen Datenprozessor und mit mehreren, periphere Einrichtungen steuernde, dezentralen Ein-Ausgabeprozessoren, wobei die dezentralen Ein-Ausgabeprozessoren jeweils Mehrfachzugriffsspeicher und eine eigene Schnittstelleneinrichtung zur internen Informationsübertragung mit dem zentralen Datenprozessor aufweisen und der Zugriff des zentralen Datenprozessors auf die peripheren Einrichtungen im störungsfreien Betrieb verschachtelt erfolgt und mit dem Zugriff des zentralen Datenprozessors auf den Mehrfachzugriffsspeicher jeweils eines bestimmten Ein-Ausgabeprozessors dieser für eine der maximalen Belegungszeit des zentralen Datenprozessors entsprechende Zeit in den Haltezustand geschaltet wird.

Derart definierte Kommunikationssysteme stellen modular aufgebaute Nebenstellenanlagen mit wenigen Standardschnittstellen dar, die entsprechend der zu erfüllenden Aufgaben in unterschiedlichsten Anlagengrößen aufgebaut sind. Die Nebenstellenanlagen können sowohl an öffentliche Netze und Dienste - Fernsprechnetz, Teletexnetz etc. - als auch an private Netze - Unteranlagen, Querverbindungsleitungen - angeschlossen sein. Als Teilnehmeranschlüsse sind analoge und digitale Endgeräte vorgesehen. Außerdem bestehen über entsprechende Schnittstellen zusätzliche Anschlußmöglichkeiten von externen Geräten, wie Drucker, betriebstechnische Terminals (PC) usw..

Die Systemarchitektur der unterschiedlichen Kommunikationssysteme ist einheitlich in drei Ebenen strukturiert:
Peripherie, dezentrale Ein-Ausgabeprozessoren und zentraler Datenprozessor.
Zur Peripherie gehören danach Baugruppen als Schnittstellen zu den angeschalteten Endgeräten und Leitungen (Teilnehmerschaltungen, Leitungsschaltungen) und Baugruppen für den Verbindungsaufbau, wie Signalisierungseinrichtungen, Sender und Empfänger.

Die zeitkritische Bearbeitung der Peripherie wird durch die dezentralen Ein-Ausgabeprozessoren übernommen, wobei die Anzahl der peripheren Einrichtungen bzw. die der Anschlußeinheiten für jeden Ein-Ausgabeprozessor in Abhängigkeit der maximal zu verarbeitenden Gesamtdatenmenge begrenzt ist. Die Ein-Ausgabeprozessoren sind somit unter anderem für die Steuerung der Standardschnittstellen und lokalen Busse, der Ziffernauswertung, der Anschaltung von Ton- und Ruftakten und der sicherheitstechnischen Anzeigen vorgesehen.
Der zentrale Datenprozessor dagegen koordiniert die Steuerung sämtlicher im Kommunikationssstem vorhandener Einrichtungen über entsprechende Busverbindungen. Außerdem werden vom zentralen Datenprozessor die Rücksetz-Logik und sicherheitstechnische Vorgänge zentral gesteuert.

Die Schnittstelle zwischen der Peripherie und dem jeweiligen dezentralen Ein-Ausgabeprozessor wird durch eine HDLC-Standardschnittstelle gebildet, die in der peripheren Steuereinrichtung enthalten ist. Dagegen wird die Schnittstelle zwischen dem dezentralen Ein-Ausgabeprozessor und dem zentralen Datenprozessor durch einen Mehrfachzugriffsspeicher gebildet, der von beiden Prozessoren beschrieben und ausgelesen werden kann. Die Steuerung dieses Mehrfachzugriffsspeichers erfolgt üblicherweise durch das eingesetzte Betriebssystem.

Wie bereits erwähnt, dient als Bindeglied zwischen dem zentralen Datenprozessor und der Peripherie der Ein-Ausgabeprozessor mit zwei peripheren Einrichtungen. Die peripheren Einrichtungen sind jeweils mit einer HDLC-Standardschnittstelle ausgestattet, über die der Datenaustausch zwischen dem Ein-Ausgabeprozessor und den angeschossenen peripheren Einrichtungen erfolgt. Aus dynamischen Gründen werden diese zwei HDLC-Standardschnittstellen verschachtelt und im sogenannten DMA-Modus, im Direktzugriff-Verfahren, betrieben. Beim Zugriff des Datenprozessors auf den Mehrfachzugriffsspeicher wird der entsprechende Ein-Ausgabeprozessor in den sogenannten Hold-Zustand gesetzt. Im dezentralen Ein-Ausgabeprozessor kann es durch diesen Hold-Zustand bei der Bearbeitung der peripheren Einrichtungen durch den DMA-Controller innerhalb des Mikroprozessors zu sporadischen Fehlern kommen, weil das Übernehmen bzw. das Lesen und Schreiben der Daten von den peripheren Einrichtungen durch den Mikrocomputer mehr als die doppelte Zeit benötigt, als der Hold-Zustand anhält. Erfolgt also während der Bearbeitungszeit des DMA-Controllers ein Zugriff des zentralen Datenprozessors auf den Mehrfachzugriffsspeicher, so kommt es zur fehlerhaften Übertragung von Daten. Die der Erfindung zugrunde liegende Aufgabe besteht darin, eine störungsfreie Bearbeitung der peripheren Einrichtungen durch den Mikrocomputer des dezentralen Ein-Ausgabeprozessors zu ermöglichen ohne wesentliche Dynamikverluste in Kauf nehmen zu müssen. Erfindungsgemäß wird dies durch die Kombination der Merkmale des Patentanspruchs 1 erreicht.

Mit dem Abspeichern der Adressen der programmanfordernden peripheren Einrichtungen im Mehrfachzugriffsspeicher und der sequentiellen Abarbeitung dieser Adressen durch den Mikroprozessor des Ein-Ausgabeprozessors nach dem Abarbeiten der verschachtelten Zugriffe wird erreicht, daß auch bei unkoordinierten Zugriff des zentralen Datenprozessors auf den Mehrfachzugriffsspeicher eine störungsfreie Bearbeitung der peripheren Einrichtungen durch den Mikoprozessor des Ein-Ausgabeprozessors gewährleistet ist.
Da bereits vor Beginn der sequentiellen Abarbeitung der Programmanforderungen der zentrale Datenprozessor von dem dezentralen Ein-Ausgabeprozessor für die Zeitdauer des Datenaustauschs in den Haltezustand geschaltet ist, ist in dieser Zeit kein Zugriff vom zentralen Datenprozessor zum Mehrfachzugriffsspeicher möglich.

Gemäß einer vorteilhaften Ausgestaltung der Erfindung wird der Haltezustand des zentralen Datenprozessors durch eine Zeitzähleinrichtung des Ein-Ausgabeprozessors nach einer, durch die maximal anstehenden Programmanforderungen der peripheren Einrichtungen vorgegebenen Zeit automatisch zurückgeschaltet, so daß beispielsweise bei einem Fehlerzustand des Ein-Ausgabeprozessors kein totaler Systemausfall durch die Sperrung des zentralen Datenprozessors erfolgt.

Die Erfindung wird in einem figürlich dargestellten Ausführungsbeispiel näher erläutert, in dem lediglich die zum Verständnis notwendigen Schalteinrichtungen als Blockschaltbild dargestellt sind.

Der zentrale Datenprozessor DP enthält den zentralen Mikroprozessor MC1, den Arbeitsspeicher MEM und die zentrale Schnittstelle SS1. Über diese zentrale Schnittstelle SS1 findet der Datenaustausch zwischen dem zentralen Datenprozessor DP und dem dezentralen Ein-Ausgabeprozessor IOP statt, der an vergleichbarer Stelle die dezentrale Schnittstelle SS2 aufweist. Der dezentrale Ein-Ausgabeprozessor IOP enthält außerdem den dezentralen Mikroprozessor MC2 mit der Steuerung des Direktzugriff-Verfahrens DMA sowie den Mehrfachzugriffsspeicher DPR. Außerdem enthält der dezentrale Ein-Ausgabeprozessor IOP die peripheren Einrichtungen PBC, die jeweils über die HDLC-Standardschittstelle die vermittlungstechnischen Daten mit den nicht dargestellten Teilnehmern austauschen, während die Sprachinformation als pulscodemoduliertes Signal PCM übertragen wird. Der dezentrale Mikroprozessor MC2 steht außerdem mit der Zeitzähleinrichtung ZE in Verbindung, die den Haltezustand des zentralen Datenprozessors DP nach einer, durch die Programmanforderungen der peripheren Einrichtungen PBC vorgegebenen Zeit automatisch zurückschaltet.

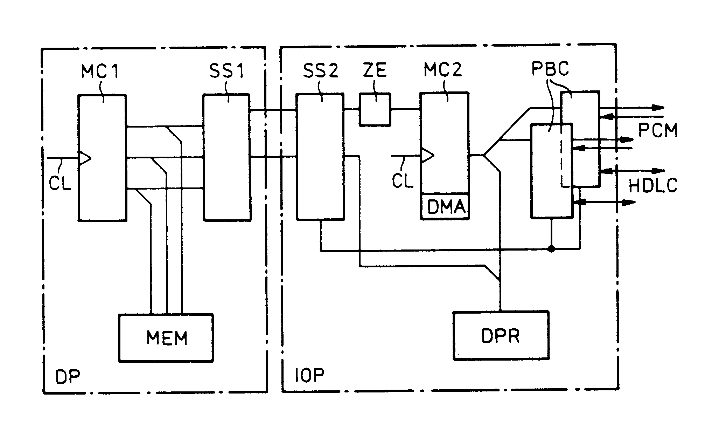

## Patentansprüche

1. Verfahren zur Steuerung eines digitalen Kommunikationssystems mit einem zentralen Datenprozessor und mit mehreren, periphere Einrichtungen steuernde, dezentralen Ein-Ausgabeprozessoren, wobei die dezentralen Ein-Ausgabeprozessoren jeweils Mehrfachzugriffsspeicher und eine eigene Schnittstelleneinrichtung zur internen Informationsübertragung mit dem zentralen Datenprozessor aufweisen und der Zugriff des zentralen Datenprozessors auf die peripheren Einrichtungen im störungsfreien Betrieb verschachtelt erfolgt und mit dem Zugriff des zentralen Datenprozessors auf den Mehrfachzugriffsspeicher jeweils eines bestimmten Ein-Ausgabeprozessors dieser für eine der maximalen Belegungszeit des zentralen Datenprozessors entsprechende Zeit in den Haltezustand geschaltet wird, **gekennzeichnet durch** die Kombination der Merkmale
1.1 die während des Haltezustandes des dezentralen Ein-Ausgabeprozessors (IOP) programmanfordernden peripheren Einrichtungen (PBC) werden im Mehrfachzugriffsspeicher (DPR) adressenmäßig gespeichert und nach Beendigung der verschachtelten Zugriffe durch den Mikroprozessor (MC2) des Ein-Ausgabeprozessors (IOP) sequentiell abgearbeitet,
1.2 vor Beginn der sequentiell abzuarbeitenden Programmanforderungen im dezentralen Ein-Ausgabeprozessor (IOP) wird von diesem der zentrale Datenprozessor (DP) für die Zeitdauer des Datenaustausches in den Haltezustand geschaltet.

2. Verfahren nach Anspruch 1, **gekennzeichnet durch** das Merkmal
2.1 der Haltezustand des zentralen Datenprozessors (DP) wird durch eine Zeitzähleinrichtung (ZE) des Ein-Ausgabeprozessors (IOP) nach einer durch die maximal anstehenden Programmanforderungen der peripheren Einrichtungen (PBC) vorgegebenen Zeit automatisch zurückgeschaltet.

## Claims

1. Method for controlling a digital communication system having a central data processor and having a plurality of decentralised input/output processors controlling peripheral devices, in which the decentralised input/output processors have in each case multiple access memories and their own interface means for internal information transmission with the central data processor, and the access to the central data processor to the peripheral devices is performed in a nested manner during fault-free operation, and with the access of the central data processor to the multiple access memory of a particular input/output processor in each case the latter is switched into the hold state for a time corresponding to the maximum occupation time of the central data processor, characterised by the combination of the features:
1.1 the program-requesting peripheral devices (PBC) during the hold state of the decentralised input/output processor (IOP) are stored in terms of their addresses in the multiple access memory (DPR) and are sequentially processed after completion of the nested accesses by the microprocessor (MC2) of the input/output processor (IOP),
1.2 before starting the program requests to be sequentially processed in the decentralised input/output processor (IOP), the central data processor (DP) is switched by the latter into the hold state for the duration of the data exchange.

2. Method according to Claim 1, characterised by the feature:
2.1 the hold state of the central data processor (DP) is automatically switched back by a time counting means (ZE) of the input/output processor (IOP) after a time predetermined by the maximum number of pending program requests of the peripheral devices (PBC).

## Revendications

1. Procédé de commande d'un système de communication numérique comportant un processeur central de données et plusieurs processeurs d'entrée-sortie décentralisés, qui commandent des dispositifs périphériques, selon lequel les processeurs d'entrée-sortie décentralisés comportent respectivement des mémoires à accès multiples et un dispositif d'interface propre pour la transmission interne d'informations avec le processeur central de données, et selon lequel l'accès du processeur central de données aux dispositifs périphériques s'effectue d'une manière imbriquée lors d'un fonctionnement non perturbé, et selon lequel, lors de l'accès du processeur central de données aux mémoires à accès multiples d'un processeur d'entrée-sortie déterminé, ce dernier est placé à l'état d'arrêt pendant un intervalle de temps correspondant à la durée maximale d'occupation du processeur central de données, caractérisé par la combinaison des caractéristiques :
1.1 les adresses des dispositifs périphériques (PBC), qui appellent un programme pendant l'état d'arrêt du processeur d'entrée-sortie décentralisé (IOP), sont mémorisées dans la mémoire à accès multiples (DPR) et, à la fin des accès imbriqués, sont traitées séquentiellement par le microprocesseur (MC2) du processeur d'entrée-sortie (IOP),
1.2 avant le début des appels de programme, à traiter séquentiellement, dans le processeur d'entrée-sortie décentralisé (IOP), ce dernier place à l'état d'arrêt le processeur central de données (DP) pendant la durée de l'échange des données.

2. Procédé suivant la revendication 1, caractérisé par la caractéristique
2.1 l'état d'arrêt du processeur central de données (DP) est supprimé automatiquement par un dispositif de comptage temporel (ZE) du processeur d'entrée-sortie (IOP), après un intervalle de temps prédéterminé par les appels de programmes, qui apparaissent au maximum, des dispositifs périphériques (PBC).
